(19) Europäisches Patentamt
European Patent Office
Office européen des brevets

(11) EP 0 595 979 B1

(12) **EUROPEAN PATENT SPECIFICATION**

(45) Date of publication and mention of the grant of the patent:
**20.03.1996 Bulletin 1996/12**

(21) Application number: **92916383.0**

(22) Date of filing: **17.07.1992**

(51) Int Cl.[6]: **C08G 61/08**

(86) International application number:
**PCT/US92/05983**

(87) International publication number:
**WO 93/02121 (04.02.1993 Gazette 1993/04)**

# (54) POLYMERIZATION PROCESS FOR CYCLOOLEFINS

POLYMERISATIONSVERFAHREN FÜR CYCLOOLEFINE

PROCEDE DE POLYMERISATION DES CYCLOOLEFINS

(84) Designated Contracting States:
**AT BE CH DE DK ES FR GB GR IT LI LU MC NL SE**

(30) Priority: **22.07.1991 US 733579**

(43) Date of publication of application:
**11.05.1994 Bulletin 1994/19**

(73) Proprietor: **SHELL OIL COMPANY**
**Houston, Texas 77252-2463 (US)**

(72) Inventors:
- **KELSEY, Donald, Ross**
  **Fulshear, TX 77441 (US)**
- **ELLISON, Robert, Hardy**
  **Houston, TX 77083 (US)**
- **HANDLIN, Dale, Lee, Jr.**
  **Houston, TX 77077 (US)**

(74) Representative:
**Cresswell, Thomas Anthony et al**
**J.A. KEMP & CO.**
**14 South Square**
**Gray's Inn**
**London WC1R 5LX (GB)**

(56) References cited:
- **PATENT ABSTRACTS OF JAPAN vol. 12, no. 326 (C-525)5 September 1988**
- **CHEMICAL PATENTS INDEX, DOCUMENTATION ABSTRACTS JOURNAL Section Ch, Week 9050,20 February 1991 Derwent Publications Ltd., London, GB; Class A, AN 90-372190.**
- **CHEMICAL PATENTS INDEX, DOCUMENTATION ABSTRACTS JOURNAL Section Ch, Week 9110,8 May 1991 Derwent Publications Ltd., London, GB; Class A, AN 91-068037.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 595 979 B1

## Description

### Technical Field

The present invention relates to a process for the production of polymeric product derived from certain adducts of vinylcyclohexene and cyclopentadiene and products thereof. More particularly, the invention relates to the ring-opening polymerization process of 5-(3-cyclohexen-1-yl)-2-norbornene and the polymer produced therefrom.

### Background Art

The production of polymers by the ring-opening or metathesis polymerization of cyclic and polycyclic olefins is well known in the art. Numerous patents and literature references, both U.S. and foreign, relate to the ring-opening polymerization of dicyclopentadiene in the presence of a variety of olefin metathesis catalyst systems. One such catalyst system is disclosed by Sjardijn et al, U.S. 4,810,762, wherein substituted phenolic tungsten halides are employed in conjunction with triorganotin hydrides. Bulk polymerization of dicyclopentadiene in the presence of similar catalyst systems is shown by U.S. 4,729,976.

The ring-opening polymerization of dicyclo-pentadiene produces a solid, hard, infusible thermoset polymer product of established utility. However, the polymerization and resulting polymer suffer from a number of disadvantages. Unless the polymerization is virtually quantitative, there will be unreacted monomer in the polymer product and a molded article formed therefrom will have a most undesirable dicyclopentadiene odor. This odor greatly limits the applications in which the polymer product can be used.

It is also known to polymerize polycyclic polyolefin monomers such as cyclopentadiene trimers, tetramers and higher oligomers, alone or with other cycloolefins. In European Patent Specification 313,838 there is disclosed a process of producing ring-opening polymerization products by polymerizing cycloolefin monomers such as norbornene or tetracyclododecene in the presence of from about 5% to about 45% of resinous cycloolefin formed from dicyclopentadiene trimers and higher oligomers which also contain common olefins such as styrene, propylene, butadiene, vinylcyclohexene and isopentene. The resinous cycloolefins are produced by heating dicyclopentadiene in the presence of more common olefins. In U.S. 5,095,082 a mixture of adducts of 4-vinylcyclohexene and cyclopentadiene Diels-Alder oligomers, optionally in the presence of dicyclopentadiene, undergoes ring-opening polymerization to produce a hard, polymeric product.

It is characteristic of many if not most ring-opening polymerizations that all carbon-carbon double bonds present in the ring or rings of monomeric reactants are involved in ring-opening polymerization. Thus, when one or more of the monomeric reactants contain multiple carbon-carbon double bonds the resulting polymer product is a highly crosslinked thermoset polymer. The thermoset polymers often exhibit useful properties. It would be of advantage, however, to provide a ring-opening polymerization process for a polycyclic polyolefin wherein the product evidences improved mechanical properties with a varying degree of crosslinking and is useful in applications not available to thermoset polymers.

### Disclosure of the Invention

The invention relates to the ring-opening polymerization of 5-(3-cyclohexen-1-yl)-2-norbornene isomers in the presence of a hindered alkylphenoxy tungsten halide and a cocatalyst which produces polymeric products with low crosslink densities.

According to the present invention, there is provided a process for the production of a tough polymer product having a toluene swell of greater than 200% by contacting a material comprising a mixture of Diels-Alder adducts of 4-vinylcyclohexane and cyclopentadiene containing at least 80% by weight of the endo and exo isomers of 5-(3-cyclohexene-1-yl) -2-norbornene, in the optional presence of up to 10% by weight based on total polymerization mixture of dicyclopentadiene or a crosslinking monomer containing at least two strained unsaturated ring systems of norbornene, under polymerization conditions with a catalyst quantity of an olefin metathesis catalyst system comprising a hexavelent tungsten halide of the formula

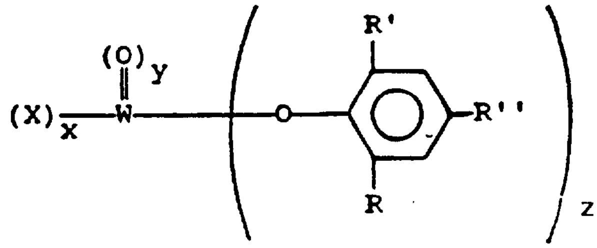

wherein each R independently is alkyl of up to 10 carbon atoms branched on the alpha carbon atoms, each R' independently is hydrogen or R, each R'' independently is hydrogen or alkyl of up to 10 carbon atoms, X is halo, x is a number from 1 to 4, z is a number from 1 to 4, and y is 0 or 1 with the sum of x + 2y + z being 6, and an alkylalumimum compound or a triorganotin compound, in the optional presence of boron halide.

A mixture of these Diels-Alder adducts can be produced by heating 4-vinyl-cyclohexene and cyclopentadiene (provided as dicyclo-pentadiene) at elevated temperatures and separating from the resulting mixture the isomers of 5-(3-cyclohexen-1-yl)-2-norbornene. These "separated" or purified 5-(3-cyclohexen-1-yl)-2-norbornene mixed isomers in at least a relatively pure form are then subjected to ring-opening polymerization in the presence of a hindered alkylphenoxy substituted tungsten halide and a cocatalyst, which is an alkylaluminum or a triorganotin cocatalyst, and optionally with a boron halide, as promoter. Cycloolefins such as dicyclopentadiene and/or certain crosslinking agents can optionally be present.

When 4-vinylcyclohexene and cyclopentadiene are heated at an elevated temperature, a variety of adducts are produced including the 1:1 adducts, 1:2 molar adducts of 4-vinylcyclohexene and cyclopentadiene, 1:3 molar adducts of 4-vinylcyclohexene and cyclopentadiene and a number of cyclopentadiene Diels-Alder oligomers such as trimers, tetramers, pentamers, and higher adducts. Of the 1:1 molar adducts, two adducts are stereoisomers represented by the following formulas

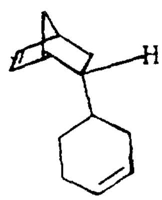

(Ia)

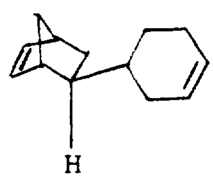

(Ib)

and a third type of 1:1 molar adduct is represented by the formula

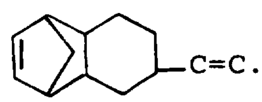

(II)

The isomers represented by the formulas Ia and Ib are isomers of 5-(3-cyclohexen-1-yl)bicyclo[2.2.1]hept-2-ene or, in more common terms, 5-(3-cyclohexen-1-yl)-2-norbornene. The isomer Ia is termed an "endo" isomer and the isomer Ib is termed an "exo" isomer as reflects the steric relationship of the cyclohexene substituent to the non-planar 6-membered ring of the norbornene moiety. As stated, the process of producing the above Ia, Ib and II adducts also produces other adducts and cyclopentadiene oligomers.

The 4-vinylcyclohexene is a well known compound illustratively produced by thermal dimerization of butadiene. The dicyclopentadiene source of cyclopentadiene is also well known and is often obtained as a by-product of olefin crackers. Dicyclopentadiene also exists in an endo form and an exo form. Either stereoisomer, or a mixture of the isomers, is suitably employed to produce the vinylcyclohexene/cyclopentadiene adducts employed in the process of the invention. Particularly useful are commercially available technical grade of dicyclopentadiene having a purity of about 83% to 95%. The technical grades are easily processed by virtue of being liquid at ambient temperature whereas the pure endo-cyclopentadiene is normally a solid melting at 32°C.

The Diels-Alder formation of vinylcyclohexene/cyclopentadiene adducts is conducted at temperatures above about 160°C. At these temperatures, the provided dicyclopentadiene de-dimerizes or cracks to produce cyclopentadiene which reacts in situ with the 4-vinylcyclohexene. Because of the reactive nature of the monomeric reactants and/or the adduct products it is desirable that adduct production is conducted in an inert reaction environment and traces of reactive materials such as oxygen should be excluded. The inclusion in the reaction mixture of free radical scavengers is also useful. Although the use of a reaction diluent is not precluded for the adduct formation process, the preferred production

of adducts is conducted in the substantial absence of reaction diluent. The reaction of 4-vinylcyclohexene and cyclopentadiene under the influence of heat produces the above 1:1 adduct isomers Ia, Ib and II as well as adducts containing greater proportions of cyclopentadiene and cyclopentadiene oligomers.

To obtain the reactants for the polymerization process of the present invention, the mixture of adducts and cyclopentadiene oligomers is separated to provide a material at least substantially enriched in the 5-(3-cyclohexen-1-yl)-2-norbornene isomers (isomers Ia and Ib) i.e., separated 5-(3-cyclohexen-1-yl)-2-norbornene, having a purity of at least 80% by weight, more preferably at least 90% by weight and even more preferably 95% by weight. The recovery of these isomers is effected by conventional physical methods. In one modification, the separation results from application of chromatographic techniques. In an alternate but generally preferred modification the separation/recovery is effected by fractional distillation, generally at a substantially reduced pressure. An initial preliminary separation is conveniently made with the use of a simple distillation column or a wiped film evaporator. More effective separation results from distillation in a multi-tray distillation column. Careful separation typically results in 1:1 adduct mixtures having as much as 90% by weight and preferably as much as 95% by weight of a mixture of Ia and Ib isomers although adduct mixtures having at least 80% by weight of 5-(3-cyclohexen-1-yl)-2-norbornene isomers are useful in the polymerization process of the invention. The remainder of the adduct mixture is typically the isomer of the formula II with less than about 5% by weight and preferably less than about 1% by weight of unreacted vinylcyclohexene and dicyclopentadiene, higher adducts and possibly cyclopentadiene oligomers, particularly cyclopentadiene trimers, also being present.

The mixture of 5-(3-cyclohexen-1-yl) -2-norbornene isomers is then subjected, according to the invention, to ring-opening polymerization in the presence of a hindered alkylphenoxy-substituted tungsten halide olefin metathesis catalyst system.

The olefin metathesis catalyst system thus comprises the specified hexavalent tungsten halide.

In the above formula R is suitably isopropyl, sec-butyl, t-butyl, t-amyl, neo-pentyl, 2-methyl-2-hexyl or 3-ethyl-3-hexyl, but is preferably isopropyl. R' is suitably hydrogen but is preferably R. The R'' group is suitably alkyl but is preferably hydrogen. Illustrative of the alkylphenoxy groups of the above formula III are 2,6-di-sec-butylphenoxy, 2,6-di-t-butyl-4-methylphenoxy, 2-isopropyl-4-ethylphenoxy and 2-t-butyl-4-hexylphenoxy. The preferred alkylphenoxy substituent of the above formula III is 2,6-diisopropylphenoxy.

The tungsten-containing catalyst system component will be a halide or an oxyhalide. Such components are hindered phenoxy-substituted tungsten halides or oxyhalides. Particularly preferred catalyst system components are di(hindered alkyl phenoxy)-substituted tungsten oxydichlorides.

The alkylaluminum compounds which are usefully employed with the tungsten catalyst are of the formula $R'''_rAlZ_s$ wherein R''' is alkyl of from 1 to 20 carbon atoms inclusive, preferably from 2 to 8 carbon atoms inclusive, Z is higher halo, preferably chloro, bromo or iodo, r is at least 1 but not more than 3 and r + s equal 3. Illustrative of such alkylaluminum compounds are ethylaluminum, dichloride, diethylaluminum chloride, triethylaluminum, diisobutyl-aluminium chloride, dioctylaluminum chloride, diethyl-aluminum iodide, ethylaluminum dibromide, tripropyl-aluminum, triisobutylaluminum and trihexylaluminum, and mixtures thereof. When an alkylaluminum compound is employed in the catalyst system, molar ratios of aluminum compound to the tungsten halide from about 1:1 to about 10:1 are useful and molar ratios from about 2:1 to about 6:1 are preferred.

The preferred material for use in the catalyst system with the tungsten halide, however, is a triorganotin compound, particularly a triorganotin hydride such as a trialkyltin hydride or triaryltin hydride wherein each alkyl or aryl (or alkyaryl) independently has up to 10 carbon atoms. Illustrative of such tin hydrides are triethyltin hydride, triisopropyltin hydride, tributyltin hydride, trioctyltin hydride, dimethylhexyltin hydride, ethylpropyloctyltin hydride, triphenyltin hydride and tritolyltin hydride. Trialkyltin hydrides wherein each alkyl is straight-chain lower alkyl of from 3 to 8 carbon atoms inclusive are preferred, and particularly preferred as the trialkyltin hydride is tri-n-butyltin hydride.

The hindered alkyl phenoxy-substituted tungsten halide and the trialkyltin hydride are suitably employed in molar ratios from about 1:1 to about 1:15 but molar ratios from about 1:2 to about 1:8 are preferred. The tungsten/tin catalyst system is provided to the polymerization mixture in a catalytic quantity. Quantities of the catalyst system sufficient to provide from about 0.001 mole percent to about 5 mole percent of tungsten based on the adduct mixture are suitable. Quantities of the catalyst system sufficient to provide from about 0.01 mole percent to about 0.1 mole percent of tungsten on the same basis are preferred.

It is, on occasion, useful to provide to the catalyst system a boron halide promoter, including boron trihalides, boron trihalide complexes and tetrahaloborates. Suitable boron halides are illustrated by boron trifluoride, boron tribromide, boron trifluoride diethyl ether complex, boron trifluoride dibutyl ether complex, tetrafluoroboric acid, methylboron difluoride, phenylboron dichloride, ammonium tetrafluoroborate, boron dichloride dimethylsulfide complex and boron trifluoride alcohol complexes. The use of boron halide promoter is optional and the promoter can be present in amounts up to about 10 moles per mole of tungsten compound. When employed, amounts of boron halide promoter from about 0.01 mole to about 2 moles per mole of tungsten compound are preferred. Particularly useful are boron trifluoride and its diethyl ether and dibutyl ether complexes.

The ring-opening polymerization of the invention is conducted by contacting the 5-(3-cyclohexen-1-yl)-2-norbornene

isomers and the olefin metathesis catalyst system. It is on some occasions useful to provide an inert reaction diluent in order to solubilize the catalyst system components. In such an embodiment, one catalyst system component would be provided with each of two portions of the reaction diluent. The adduct monomer mixture to be polymerized is suitably provided separately or with either portion. In the preferred modification, however, no added reaction diluent is employed and the monomeric mixture and the catalyst components are mixed directly. To effect polymerization, the 5-(3-cyclohexen-1-yl)-2-norbornene isomers and the catalyst system are contacted under polymerization conditions. Typical polymerization conditions include a polymerization temperature from about 250C to about 200°C with polymerization temperatures from about 750C to about 140°C being preferred. The polymerization pressure is that pressure required to maintain the polymerization mixture in a non-gaseous state. Such pressures will vary with the reaction temperature but pressures up to 5 atmospheres are typical and frequently ambient pressure is suitable and is preferred. The polymerization is preferably conducted in an inert environment with reactive materials such as water or oxygen being excluded. However, the catalyst system employed in this invention is relatively insensitive to oxygencontaining organic impurities which can be present in the mixture of 5-(3-cyclohexen-1-yl)-2-norbornene isomers.

The polymeric products obtained from the process of this invention have a very low crosslink density, which can be measured by toluene swell of greater than 200%, preferably greater than 300%. For example, swell is measured by placing approximately .7-1 g of a sample optionally divided in up to three pieces in 20 ml of toluene at room temperature for 24 hours. Percent swell is calculated as $\frac{W-Wo}{Wo}$ X 100 where W is the final weight of the sample and Wo is initial weight of the sample before immersion in toluene. If the polymer samples swell extensively to a point where they have become gel-like and are no longer removable from the toluene solution, the swell is then estimated to be greater than 1000% The polymer products also have a relatively high glass transition temperature.

In Japanese patent specification 63-92640, a polymeric product obtained by polymerizing 2-(cyclohexene-3-yl)-bicyclo[2.2.1]heptene-5 ("CHB") with a catalyst prepared from tungsten hexachloride and nonylphenol is disclosed. However, the polymeric product obtained from such process has a relatively high crosslink density with a correspondingly low toluene swell of 181% (calculated from the reported toluene swell ratio of 2.81).

The mixture of 5-(3-cyclohexen-1-yl) -2-norbornene isomers is polymerized in the optional presence of other cyclic polyolefins. In one embodiment, dicyclopentadiene is provided to modify the properties of the resulting polymeric product. The amount of dicyclopentadiene to be employed, when dicyclopentadiene is to be provided, is relatively small and dicyclopentadiene should not constitute more than about 20% by weight of the mixture to be polymerized. For most purposes, however, added dicyclopentadiene is not provided. In a second embodiment, the mixture to be polymerized contains added crosslinking agent in order to produce a more extensively crosslinked polymer product. Suitable crosslinking agents are polycyclic olefin monomers characterized by strained unsaturated ring systems such as are found in norbornenetype compounds. To be an effective crosslinking agent for the polymers of the present invention, a compound must contain at least two of the strained unsaturated ring systems of the norbornene type, i.e. having the norbornene structure. Illustrative of suitable crosslinking agents are reactive monomers such as norbornadiene, which is considered a superimposition of two norbornene structures, a number of isomeric norbornadiene dimers illustrated by dimers of the formula

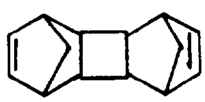

(IV)

and certain cyclopentadiene trimers, tetramers, and pentamers. Such monomers are well known compounds. The presence of crosslinking agent in the polymerization mixture of the invention is optional and no crosslinking agent is required. Quantities of crosslinking agent up to about 10% by weight of the total polymerization mixture are suitable and when present, quantities of crosslinking agent from about 0.1% by weight to about 8% by weight of the total polymerization mixture are preferred.

In an illustrative polymerization, the monomeric adducts, the catalyst system and any added dicyclo-pentadiene or crosslinking agent are mixed at a relatively low temperature at which polymerization at a rapid rate does not occur. This relatively slow initial reaction rate permits efficient mixing or other processing of the polymerization mixture as well as the incorporation of fillers, reinforcements, antioxidants, stabilizers, pigments, elastomers, or other materials in order to influence the properties of the polymerization product. The polymerization mixture is then raised to polymerization temperature and the polymerization is rapidly complete.

A particularly contemplated embodiment of the polymerization process is in a reaction injection molding (RIM) process. Because of the initial relatively low viscosity of the polymerization mixture and the low reaction rate of ambient conditions, the monomers and catalyst system are mixed and transferred to a suitable mold including those molds for large castings of complex shapes. In a typical RIM-type process of the invention, the mixing/transfer time is no more than about 2 minutes and frequently is considerably less and the time for polymerization when in a mold is from about

10 seconds to about 1 minute, depending in part upon the polymerization temperature and catalyst system employed.

The polymer product is of variable character depending in part upon the purity of the 5-(3-cyclohexen-1-yl)-2-norbornene isomers used in the polymerization, the presence or absence of boron halide catalyst system promoter and the presence or absence of added crosslinking agent. When crosslinking agent is provided to the polymerization mixture, the product will be at least partly thermoset in character and will demonstrate properties characteristic of thermoset polymers, e.g., hardness and insolubility. The use of a boron promoter, while enabling reaction under milder polymerization conditions, also promotes a somewhat greater degree of crosslinking and more thermoset polymer properties in the polymer product. The degree of crosslinking is also enhanced by a relatively impure 5-(3-cyclohexen-1-yl)-2-norbornene isomer mixture, particularly if that mixture contains amounts of 1:2 and higher molar adducts of 4-vinylcyclohexene and cyclopentadiene or cyclopentadiene oligomers, particularly the cyclopentadiene trimer. The thermoset-like polymer products have properties typical of conventional thermoset polymers but exhibit elasticity which most thermoset polymers do not have. They are processed by methods conventional for thermoset polymers and find utility in applications such as circuit boards for electrical and electronic applications and as encapsulating material where properties of toughness and strength are important.

Conversely, in the absence of crosslinking agent and when relatively pure 5-(3-cyclohexen-1-yl)-2-norbornene isomer mixtures are employed in the polymerization, the polymer product is more thermoplastic in character. Such polymers have toughness and strength as well as elasticity and are processed by methods typical for conventional thermoplastics, e.g., extrusion or injection molding. The thermoplastic products are at least partially soluble in conventional solvents such as xylene and flexible films can be cast from the resulting solutions. Among other applications for the thermoplastic polymer products are the production of parts and housings for automotive applications.

The process of the invention provides polymer products of wider application than when dicyclopentadiene is polymerized because of improved physical properties such as better toughness as determined by elongation to break, better heat welding and post-polymerization forming, but also because of the lower exotherm which results when the reactants and catalyst system are mixed. In bulk or adiabatic polymerization, dicyclopentadiene exotherms to about 180°C to 210°C whereas in the present process the monomer mixture exhibits a reaction exotherm of from about 140°C to 160°C. In the case of dicyclopentadiene polymerization, the heat transfer from relatively thick portions of an article being molded is often inadequate during the exotherm and often the process causes the monomer to "boil" and form bubbles which weaken the part. If a lower polymerization temperature is used, the thin portions of the article are under-polymerized. The present process with a lower exotherm allows thicker articles to be molded as well as articles having greater variation in cross-section. Also, the product has no detectable characteristic dicyclopentadiene odor.

The invention is further illustrated by the following Illustrative Embodiments which should not be regarded as limitations.

Illustrative Embodiment I

Dicyclopentadiene and 4-vinylcyclohexene in equimolar mixture were heated in an autoclave at 240°C for 4-4.5 hours. The reaction product was diluted with cyclohexane and passed through a packed bed of alumina in order to remove the t-butylcatechol inhibitor introduced with the reactants. The resulting product mixture as distilled in a wiped film evaporator at 3 mm Hg pressure at 90°C to afford a light fraction containing unreacted vinylcyclohexene and dicyclopentadiene and the mono-adducts of 4-vinylcyclohexene and cyclopentadiene. A 150 g sample of this distillate was vacuum distilled using a 10-tray Oldershaw column to give four fractions. The fourth fraction, 65 g, was shown by gas chromatographic analysis to consist of 0.15% dicyclopentadiene, 88.3% endo-5-(3-cyclohexen-1-yl)-2-norbornene, 6.1% exo-5-(3-cyclohexen-1-yl)-2-norbornene and two additional components present in an amount of 1.9% and 2.4% which are believed to be isomeric adduct of the formula

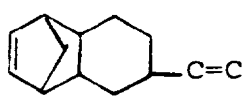

,

several additional components totalling about 0.4%, 0.4% tricyclopentadiene and about 0.4% unidentified components. Analysis of the fraction by nuclear magnetic resonance indicated about 87 mole percent of the above endo adduct, about 9 mole percent of the above exo adduct and about 5% of the isomeric adducts of the above formula.

Illustrative Embodiment II

In a glove box under a nitrogen atmosphere, a 1.5 g portion of the fourth fraction of Illustrative Embodiment I, dried by molecular sieves, was mixed with 0.0035 g (0.0056 mmol) of bis(2,6-diisopropylphenoxy)tungsten oxydichloride and to the resulting mixture was added 0.0065 g (0.0223 mmol) of tributyltin hydride. The mixture was transferred to an aluminum mold which was then quickly heated to 100°C, held at that temperature for about 15 minutes and then cooled

to ambient temperature. The polymeric product contained in the mold was a hard polymeric product having a glass transition temperature of 120°C (as determined by dynamic mechanical thermal analysis).

The structure of the polymer is difficult to determine precisely but is believed to have at least 80% of the repeating units of the structure

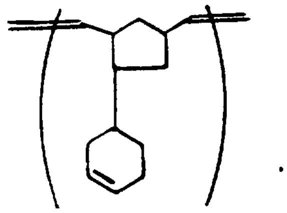

An attempt to determine the swell of the polymer in toluene gave a viscous, jelly-like mass which was further diluted with toluene to afford a clear solution with little or no obvious gel present. This solution was used to cast transparent, flexible films of the polymer.

Illustrative Embodiment III

Samples of mono-adduct (MA) mixture similar to that produced in Illustrative Embodiment I were polymerized with a norbornadiene (NB) or norbornadiene dimer (NBD) crosslinking agent present in order to produce a more extensively crosslinked polymer. In each case the catalyst system comprised 0.023 g of bis(2,6-diisopropylphenoxy) tungsten oxydichloride and 0.093 g of tributyltin hydride and 0.0017 g of boron trifluoride dibutyl ether complex was also present. For each polymer product, the glass transition temperature was determined (by dynamic mechanical thermal analysis) as was the swell in toluene and the weight percent extracted by toluene. The results are shown in Table I.

TABLE I

| MA, g | Crosslinker, g | Tg, °C | Swell % | Extractables % |
|---|---|---|---|---|
| 15.92 | NBD, 0.08 | 130 | 452 | <0.04 |
| 15.82 | NBD, 0.16 | 132 | 317 | 0.1 |
| 15.68 | NBD, 0.32 | ~130 | 231 | 0.09 |
| 15.92 | NB, 0.08 | 127 | 605 | 0.04 |
| 15.84 | NB, 0.16 | ~121 | 317 | 0.04 |
| 15.68 | NB, 0.32 | ~118 | 502 | <0.04 |
| 15.2 | NB, 0.8 | ~119 | 411 | 0.05 |

Illustrative Embodiment IV

A 50 g quantity of a mono-adduct mixture similar to that produced in Illustrative Embodiment I was polymerized in a RIM-type polymerization using a catalyst system which comprised 0.116 g of bis(2,6-diisopropylphenoxy)tungsten oxydichloride and 0.215 g of tributyltin hydride. The polymerization took place in a mold heated to 120°C and the reaction exotherm was 4°C. The resulting polymeric product has a glass transition temperature (as determined by dynamic mechanical thermal analysis) of 126°C, a flexural modulus of 1700 MPa (250,000 psi), a flexural strength of 66 MPa (9500 psi) and an Izod impact of 0.28 J/cm (0.52 ft-lb/in).

Illustrative Embodiment V

Samples of the polymer product of the invention were produced and the properties of these samples were compared to a sample of polydicyclopentadiene aged in air for a period of days. In each case, the monomer mixture was mixed with the catalyst system and placed in a mold approximately 0.08 cm (1/32-inch) thick heated to 120°C. Comparative sample A was produced by polymerizing 50 g of dicyclopentadiene in the presence of 0.079 g of his(2,6-diisopropylphenoxy)tungsten oxydichloride, 0.15 g of tributyltin hydride and 0.0062 g of boron trifluoride dibutyl ether complex. Sample B was produced by polymerizing 70 g of a mono-adduct mixture similar to that of Illustrative Embodiment I in the presence of 0.165 g of bis(2,6-diisopropylphenoxy)tungsten oxydichloride and 0.308 g of tributyltin hydride. Sample C was prepared in a similar manner except that 0.35 g of a norbornadiene dimer replaced an equivalent-weight of the mono-adduct mixture. The results of the property comparison are shown in Table II. The elongation to break data demonstrate that the toughness of Samples B and C is comparable to other tough thermoplastic polymers and is observed over longer aging times than are observed with polydicyclopentadiene.

Swell in toluene (room temperature, 24 hours) showed 1130% swell for Sample B when measured 1-2 days after molding. The polymer product of the invention has a very low crosslink density as seen from the very high swell value.

TABLE II

| Sample | Days After Molding | Tensile Modulus, MPa (psi) | Tensile Yield Stress MPa (psi) | Elongation at Break, % |
|---|---|---|---|---|
| A | 1 | 1260 (183,000) | 46 (6700) | 123 |
| | 6 | 1365 (198,000) | 47 (6800) | 119 |
| | 8 | 1410 (204,000) | 50 (7300) | 28 |
| | 9 | 1430 (207,000) | 52 (7500) | 24 |
| B | 1-2 | 1210 (176,000) | 43 (6300) | 151 |
| | 11 | 1360 (197,000) | 52 (7500) | 115 |
| | 18 | 1190 (173,000) | 40 (5800) | 54 |
| C | 2 | 1230 (178,000) | 43 (6200) | 77 |
| | 11 | 1280 (186,000) | 45 (6500) | 143 |
| | 21 | 1210 (176,000) | 41 (6000) | 43 |

<u>Illustrative Embodiment VI</u>

In a dry nitrogen glove box, a 30 ml dried, silanized serum bottle with a magnetic stirrer was charged with 0.527 g of a 7% solution of the bis(2,6-diisopropylphenoxy) tungsten oxydichloride catalyst (0.059 mmol) in dry mono-adduct monomer and 15.51 g dry, degassed mono-adduct mixture similar to that of Illustrative Embodiment I, and the bottle was sealed and removed from the nitrogen box. In the hood, the bottle was placed under an argon purge via syringe needles, a 0.16 x 7.6 cm (1/16" x 3") thermocouple protection tube was positioned near the center of solution, and 0.197 ml of a 1.8M solution of ethylaluminum dichloride (0.355 mmol) in toluene was added via syringe, whereupon the reaction mixture gelled. The mixture was then placed in a 90°C oil bath, a K thermocouple was insert into the protection tube, and the mixture's temperature was monitored. Within approximately 0.1 minute after beginning monitoring, the polymerization mixture had reached a maximum exotherm temperature of 151°C and the internal temperature slowly declined over the next 10 minutes. The product was a hard polymer. Swell and extraction in toluene (room temperature, 24 hours) showed 929% swell and 0.6% extractable monomer by gas chromatography (nonane internal standard).

<u>Illustrative Embodiment VII</u>

The procedure of Illustrative Embodiment VI was followed using 0.205 g of the tungsten catalyst solution (0.020 mmol), 35 µl of a 1% solution of boron trifluoride dibutyl ether complex (0.0017 mmol) in mono-adduct, 15.78 g of dry, degassed mono-adduct mixture similar to that of Illustrative Embodiment I, and tributytin hydride (0.027 g, 0.093 mmol) cocatalyst in place of ethylaluminum chloride. Within about 2.2 minutes after beginning monitoring of the reaction temperature, the polymerization mixture had reached a maximum exotherm temperature of 167°C. The product was a hard polymer.

In attempting to measure the swell, the resulting polymer product was placed in toluene, but the product formed a gel-like material which was unremovable for swell measurements and the swell was estimated to be greater than 1000%. The glass transition temperature ("Tg"), sometimes referred to in the art as the "softening point" (when measured by TMA) of the polymer product sample was measured by thermal mechanical analysis ("TMA") by heating the sample from room temperature at 10°C/min in a stream of nitrogen to a final temperature of about 280°C. The heating cycle was repeated two additional times. The glass transition temperatures were 120°C, 131°C, and 131°C for the first, second and third cycles, respectively.

To summarize, the polymer products obtained without any added crosslinking agents according to the invention have a swell value greater than about 500%. Even with added crosslinking agent, the crosslink densities of the products are low as can be seen from the relatively high perdent toluene swell values of between 230% and 605% (Table I).

**Claims**

1. A process for the production of a tough polymer product having a toluene swell of greater than 200% by contacting a material comprising a mixture of Diels-Alder adducts of 4-vinylcyclohexene and cyclopentadiene containing at least 80% by weight of the endo and exo isomers of 5-(3-cyclohexene-1-yl)-2-norbornene, in the optional presence

of up to 10% by weight based on total polymerization mixture of dicyclopentadiene or a crosslinking monomer containing at least two strained unsaturated ring systems of norbornene, under polymerization conditions with a catalytic quantity of an olefin metathesis catalyst system comprising a hexavalent tungsten halide of the formula

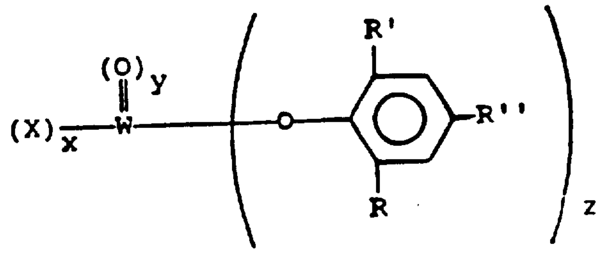

wherein each R independently is alkyl of up to 10 carbon atoms branched on the alpha carbon atom, each R' independently is hydrogen or R, each R'' independently is hydrogen or alkyl of up to 10 carbon atoms, X is halo, x is a number from 1 to 4, z is a number from 1 to 4, and y is 0 or 1 with the sum of x + 2y + z being 6, and an alkylaluminum compound or a triorganotin compound, in the optional presence of a boron halide.

2. A process according to claim 1 wherein said material contains at least 90% by weight of the endo and exo isomers of 5-(3-cyclohexen-1-yl)-2-norbornene.

3. A process according to claim 1 or 2 wherein the catalyst system is provided in an amount from 0.001 to 5 mole percent based on total Diels-Alder adducts.

4. A process according to claim 1, 2 or 3 wherein the catalyst system comprises an alkylaluminum compound of the formula $R'''_rAlZ_s$ wherein R''' is alkyl of up to 20 carbon atoms inclusive, Z is halogen, r is at least 1 and r + s equals 3.

5. A process according to claim 1, 2 or 3 wherein the catalyst system comprises a trialkyltin hydride or a triaryltin hydride wherein each alkyl or aryl independently has up to 10 carbon atoms inclusive.

6. A process according to claim 5 wherein each alkyl of the trialkyltin hydride is straight-chain alkyl of from 3 to 8 carbon atoms inclusive.

7. A process according to any one of the preceding claims wherein each R is alkyl from 3 to 8 carbon atoms.

8. A process according to claim 7 wherein X is chloro.

9. A process according to any one of the preceding claims wherein the tungsten halide is bis(2,6-diisopropylphenoxy) tungsten oxydichloride.

10. A process according to any one of the preceding claims wherein the reaction mixture contains from 0.1 to 8% by weight, based on total reaction mixture, of a polycyclic olefin containing at least two strained ring systems of norbornene.

11. A process according to claim 10 wherein the polycyclic olefin is norbornadiene, norbornene dimer, cyclopentadiene trimer, cyclopentadiene tetramer or cyclopentadiene pentamer.

12. A process according to any one of the preceding claims wherein there is used, as boron halide, boron trifluoride or a diethyl ether complex or dibutyl ether complex of boron trifluoride.

13. A process according to claim 12 wherein the mole ratio of boron halide to tungsten halide is from 0.01/1 to 2/1.

**Patentansprüche**

1. Verfahren zur Herstellung eines zähen Polymerproduktes mit einer Quellfähigkeit in Toluol von mehr als 200 % durch Zusammenbringen eines Materials, umfassend ein Gemisch aus Diels-Alder-Addukten von 4-Vinylcyclohexen und Cyclopentadien, enthaltend mindestens 80 Gew.-% der Endo- und Exo-Isomeren von 5-(3-Cyclohexen-1-yl)-2-norbornen, gegebenenfalls in Gegenwart von bis zu 10 Gew.-%, bezogen auf das gesamte Polymerisations-gemisch, Dicyclopentadien oder eines Vernetzungsmonomers, enthaltend mindestens zwei gespannte (strained) ungesättigte Ringsysteme von Norbornen, unter Polymerisationsbedingungen mit einer katalytischen Menge eines Olefinmetathese-Katalysatorsystems, umfassend ein 6-wertiges Wolframhalogenid der Formel

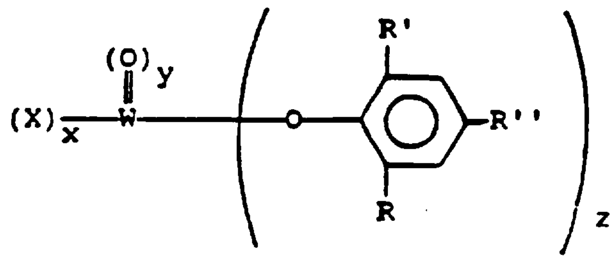

in der jedes R unabhängig Alkyl mit bis zu 10 Kohlenstoffatomen, das an dem α-Kohlenstoffatom verzweigt ist, bedeutet, jedes R' unabhängig Wasserstoff oder R bedeutet, jedes R" unabhängig Wasserstoff oder Alkyl mit bis zu 10 Kohlenstoffatomen bedeutet, X Halogen ist, x eine Zahl von 1 bis 4 ist, z eine Zahl von 1 bis 4 ist und y 0 oder 1 ist, wobei die Summe von x + 2y + z 6 ist sowie eine Alkylaluminiumverbindung oder eine Triorganozinnverbindung, gegebenenfalls in Gegenwart eines Borhalogenids.

**2.** Verfahren nach Anspruch 1, wobei das Material mindestens 90 Gew.-% der Endo- und Exo-Isomeren von 5-(3-Cyclohexen-1-yl)-2-norbornen enthält.

**3.** Verfahren nach Anspruch 1 oder 2, wobei das Katalysatorsystem in einer Menge von 0,001 bis 5 Mol-%, bezogen auf die gesamten Diels-Alder-Addukte, vorhanden ist.

**4.** Verfahren nach Anspruch 1, 2 oder 3, wobei das Katalysatorsystem eine Alkylaluminiumverbindung der Formel $R'''_rALZ_s$ bedeutet, wobei R''' Alkyl mit bis zu einschließlich 20 Kohlenstoffatomen ist, Z Halogen ist, r mindestens 1 ist und r + s 3 ist.

**5.** Verfahren nach Anspruch 1, 2 oder 3, wobei das Katalysatorsystem ein Trialkylzinnhydrid oder ein Triarylzinnhydrid umfaßt, wobei jede Alkyl- oder Arylgruppe unabhängig bis zu einschließlich 10 Kohlenstoffatome umfaßt.

**6.** Verfahren nach Anspruch 5, wobei jedes Alkyl des Trialkylzinnhydrids ein geradkettiges Alkyl mit 3 bis einschließlich 8 Kohlenstoffatomen ist.

**7.** Verfahren nach einem der vorangehenden Ansprüche, wobei jedes R ein Alkyl mit 3 bis 8 Kohlenstoffatomen ist.

**8.** Verfahren nach Anspruch 7, wobei X Chlor ist.

**9.** Verfahren nach einem der vorangehenden Ansprüche, wobei das Wolframhalogenid Bis(2,6-diisopropylphenoxy) wolfram-oxydichlorid ist.

**10.** Verfahren nach einem der vorangehenden Ansprüche, wobei das Reaktionsgemisch 0,1 bis 8 Gew.-%, bezogen auf das gesamte Reaktionsgemisch, eines polycyclischen Olefins, enthaltend mindestens zwei gespannte Ringsysteme von Norbornen, enthält.

**11.** Verfahren nach Anspruch 10, wobei das polycyclische Olefin Norbornadien, Norbornendimer, Cyclopentadientrimer, Cyclopentadientetramer oder Cyclopentadienpentamer ist.

**12.** Verfahren nach einem der vorangehenden Ansprüche, wobei als Borhalogenid Bortrifluorid oder ein Diethyletherkomplex oder Dibutyletherkomplex von Bortrifluorid verwendet wird.

**13.** Verfahren nach Anspruch 12, wobei das Mol-Verhältnis von Borhalogenid zu Wolfram-Halogenid 0,01:1 bis 2:1 beträgt.

## Revendications

1. Procédé de préparation d'un produit de polymère tenace ayant un taux de gonflement dans le toluène supérieur à 200%, en mettant un matériau comprenant un mélange des produits d'addition de Diels-Alder du 4-vynilcyclohexène et du cyclopentadiène contenant au moins 80% en poids d'isomères endo et exo du 5-(3-cyclohexène-1-yl)-2-norbornène, en la présence éventuelle d'au plus 10% en poids, par rapport au mélange total de polymérisation, d'un dicyclopentadiène ou d'un monomère de réticulation contenant au moins deux systèmes cycliques insaturés tendus de norbornène, dans des conditions de polymérisation, en contact avec une quantité catalytique d'un système de catalyseurs de métathèse d'oléfines comprenant un halogénure de tungstène hexavalent correspondant à la formule

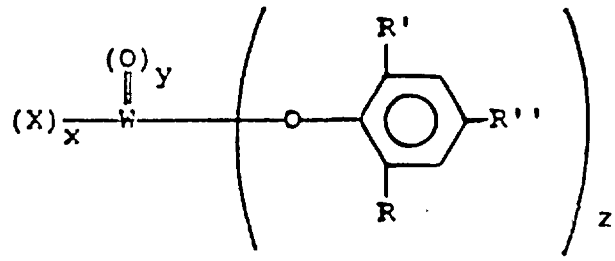

dans laquelle chaque R représente indépendamment un groupe alkyle comportant au plus 10 atomes de carbone rattaché à l'atome de carbone alpha, chaque R' représente indépendamment un atome d'hydrogène ou R, chaque R" représente indépendamment un atome d'hydrogène ou un groupe alkyle comportant au plus 10 atomes de carbone, X représente un atome d'halogène, x est un nombre de 1 à 4, z est un nombre de 1 à 4, et y vaut 0 ou 1, sachant que la somme x+2y+z est égale à 6, et avec un composé d'alkylaluminium ou un composé de triorganoétain, en la présence éventuelle d'un halogénure de bore.

2. Procédé conforme à la revendication 1, dans lequel ledit matériau contient au moins 90% en poids d'isomères endo et exo du 5-(3-cyclohexène- 1 -yl)-2-norbornène.

3. Procédé conforme à la revendication 1 ou 2, dans lequel le système de catalyseurs est fourni en une quantité de 0,001 à 5 % en moles par rapport aux produits totaux d'addition de Diels-Alder.

4. Procédé conforme à la revendication 1, 2 ou 3, dans lequel le système de catalyseurs comprend un composé d'alkylaluminium de formule $R'''_rAlZ_s$ dans laquelle R''' représente un groupe alkyle comportant au plus 20 atomes de carbone, Z représente un atome d'halogène, r vaut au moins 1, et r+s est égal à 3.

5. Procédé conforme à la revendication 1, 2 ou 3, dans lequel le système de catalyseurs comprend un hydrure de trialkylétain ou un hydrure de triarylétain dans lequel chaque groupe aryle ou alkyle comporte indépendamment au plus 10 atomes de carbone.

6. Procédé conforme à la revendication 5, dans lequel chaque groupe alkyle de l'hydrure de trialkylétain est un groupe alkyle à chaîne linéaire comportant 3 à 8 atomes de carbone, limites incluses.

7. Procédé conforme à l'une quelconque des précédentes revendications, dans lequel chaque R représente un groupe alkyle comportant 3 à 8 atomes de carbone.

8. Procédé conforme à la revendication 7, dans lequel X représente un atome de chlore.

9. Procédé conforme à l'une quelconque des précédentes revendications, dans lequel l'halogénure de tungstène est l'oxydichlorure de bis(2,6-diisopropylphénoxy)tungstène.

10. Procédé conforme à l'une quelconque des précédentes revendications, dans lequel le mélange de réaction contient de 0,1 à 8% en poids, par rapport au mélange total de réaction, d'une oléfine polycyclique contenant au moins deux systèmes cycliques tendus de norbornène.

11. Procédé conforme à la revendication 10, dans lequel l'oléfine polycyclique est un norbornadiène, un dimère de norbornène, un trimère de cyclopentadiène, un tétramère de cyclopentadiène, ou un pentamère de cyclopentadiène.

12. Procédé conforme à l'une quelconque des précédentes revendications, dans lequel on utilise, comme halogénure

de bore, le trifluorure de bore ou un complexe diéthyléther/(trifluorure de bore) ou un complexe dibutyléther/(trifluorure de bore).

**13.** Procédé conforme à la revendication 12, dans lequel le rapport molaire d'halogénure de bore à l'halogénure de tungstène vaut de 0,01/1 à 2/1.